# EUROPEAN PATENT APPLICATION

(11) **EP 0 676 264 A1**
(43) Date of publication of application: **11.10.1995**
(21) Application number: 95301224.2
(22) Date of filing: 24.02.1995
(51) Int. Cl.: B27C 5/10, B25F 5/00, B23Q 11/00

(54) **Router**

(30) Priority: 03.03.1994 DE 4407436
(71) Applicant: Black & Decker Inc., Newark Delaware 19711 (US)
(72) Inventor: Buchholz, Achim, D-65549 Limburg (DE); Stirm, Michael, D-61440 Oberursel (DE)
(74) Representative: Stagg, Diana Christine

(57) **Abstract**

A router with a cutter head (1) containing a drive motor and displaceably held at guide columns (11,12) which are secured at a base plate (10) in which an opening or recess (13) is provided for the passage of a cutter inserted in the tool holder (2) of the cutter head (1) is provided with a cutting depth adjustment device with a rotary plate (20) disposed at the base plate (10) with at least two depth stops (24,25,26) of different height which selectively can be brought into an operating position and with a stop element (6) which is held at the cutter head (1). In order to protect the operator from reaching into the area of the rotating cutter the rotary plate (20) is disposed so that it surrounds a guide column (12) with the result that the guide column (12) is located between cutter and the area of the rotary plate (20) to be handled by the operator.

## Description

The invention relates to a router with a cutter head containing the drive motor which is held in a displaceable manner at guide columns which are secured at a base plate and which extend away from it vertically to its workpiece engagement surface, with a tool holder for a cutter or the like provided at the side of the cutter head facing towards the base plate and coupled to the drive motor for a cutter or the like, in the axial extension of which the base plate is provided with an opening or recess for the passage of the cutter or the like, as well as with a cutting depth adjustment device which is provided with a rotary plate mounted on the base plate with at least two depth stops of different height which selectively can be brought into an operating position and with a stop element which is held at the cutter head and which prevents a further lowering movement of the cutter head by bearing on the depth stop located in the operating position.

Routers of this type are conventional (e.g. U.S. Patent 4 938 642) and they have the advantage that the operator, with the aid of the cutting depth adjustment device, can preset at least two cutting depths so as then to be able to activate these without further resetting operations on the router simply by rotating the rotary plate so that the router can be operated as desired with one or other preset cutting depth. In this arrangement the turret comprising the rotary plate of the cutting depth adjustment device is located on the upper side of the base plate and in the area between the guide columns and generally near one of these guide columns. The rotary plate is normally circular and is rotated from one operating position into the other by the operator taking hold of its outer periphery or, however, by his taking hold of the take-up protrusions for the normally adjustable depth stops provided on the upper side of the rotary plate.

In accordance with the safety requirements it is necessary for the operator, when the router is in operation, to be protected from reaching into the area where the cutter or the like is rotating. This danger is generally absent when the operator holds the router for processing a workpiece as he then requires both hands to move the cutter head upwards and downwards by taking hold of the lateral handles which are formed on it as well as, where applicable, to move the complete router in relation to the surface of the workpiece to be processed. If, however, the operator, when the cutter or the like is being driven, carries out a rotating movement of the turret for setting another cutting depth, his hand which is carrying out the rotating movement is brought near to the driven cutter or the like so that a definite danger exists.

The object of the invention is to provide for a router on which the operator is protected from injury without additional components on the router when he changes the cutter depth setting with a driven cutter or the like.

To achieve this objective a router of the type mentioned in the introduction is constructed in such a way according to the invention that the rotary plate is disposed so that it surrounds a guide column wherein preferably the axis of rotation of the rotary plate and the longitudinal centre axis of the guide column surrounded by the rotary plate run coaxially.

A guide column which shields the hand of the operator when the turret comprising the rotary plate is rotated for moving a depth stop into its operating position in relation to the cutter or the like is located between the outer part of the turret and the cutter or the like inserted in the tool holder as a result of the arrangement of the rotary plate according to the invention. Without a protection cover constructed as a separate component being required there is thus no danger of the operator, as in the case of the known arrangements of the turret, inadvertently reaching into the operating area of the driven cutter or the like.

The operating position of the depth stops is preferably located at the side of the guide column surrounded by the rotary plate which is facing towards the tool holder so that the operator in normal operation does not tend to effect the rotation of the rotary plate by taking hold of a depth stop or a protrusion of the turret which takes up these stops.

In order to make operation even safer the depth stops can be disposed in an angle area of the rotary plate of 180 degrees at the most and the rotary plate can be provided with a handle portion extending outwards from the side of the guide column surrounded by it which is facing away from the tool holder. In this way the operator is caused to handle the area of the rotary plate which is farthest away from the guide column and particularly the tool carrier in order to adjust the turret.

The invention will be explained below in greater detail on the basis of the schematic figures which show an embodiment.
- Figure 1: shows a perspective view of a router.
- Figure 2: shows an exploded view of a partial area and components of the router shown in Figure 1.

The illustrated router is provided with a cutter head 1 with handles 4 disposed laterally and contains an electric motor which is not shown and which can be connected to a voltage source via a power supply cable 5. The cutter head 1 is held in the usual manner at guide columns 11 and 12 and can be lowered from an upper position against spring force. The guide columns 11 and 12 are secured at the upper side of a base plate 10 which is provided with an opening 13, through which the centre axis 3 extends substantially in a central position so that this centre axis runs coaxially with the axis of rotation and the centre axis of the tool holder 2 which protrudes from the lower side of the cutter head 1 and into which a cutter or the like can be inserted which is then driven in rotation by means of the electric motor coupled to the tool holder 2. The rim area of the base plate 10 surrounding the opening 13, which is provided with a lower wall which comes to bear on the workpiece and an upper wall, forms passage openings for a suction extraction channel 14 which basically completely surrounds the opening 13, which terminates outwards at a suction extraction connection 15 and to which for example a vacuum cleaner or the like can be connected so as to be able to exhaust by suction the dust and chips which have been produced during workpiece processing.

A stop rod 6 is provided in the cutter head 1 which extends in parallel to the guide columns 11 and 12, which is located immediately adjacent to the guide column 12 and which can be fixed at a desired height by the operator in the usual manner by means of a clamping screw 7. The stop rod 6 is part of a cutting depth adjustment device which also includes the rotary plate 20 which is located on a somewhat elevated bearing area 16 of the upper wall of the base plate 10 and is provided with a central opening through which the guide column 12 with the circular cross section extends so that the axis of rotation of the rotary plate 20 which coincides with the centre axis of the central opening of the rotary plate 20 runs coaxially with the longitudinal axis of the guide column 12. The rotary plate 20 is secured against lifting movements from the base plate 10 by a spring ring 32 which rests against its upper side and which engages in an annular groove of the guide column 12 which is not shown.

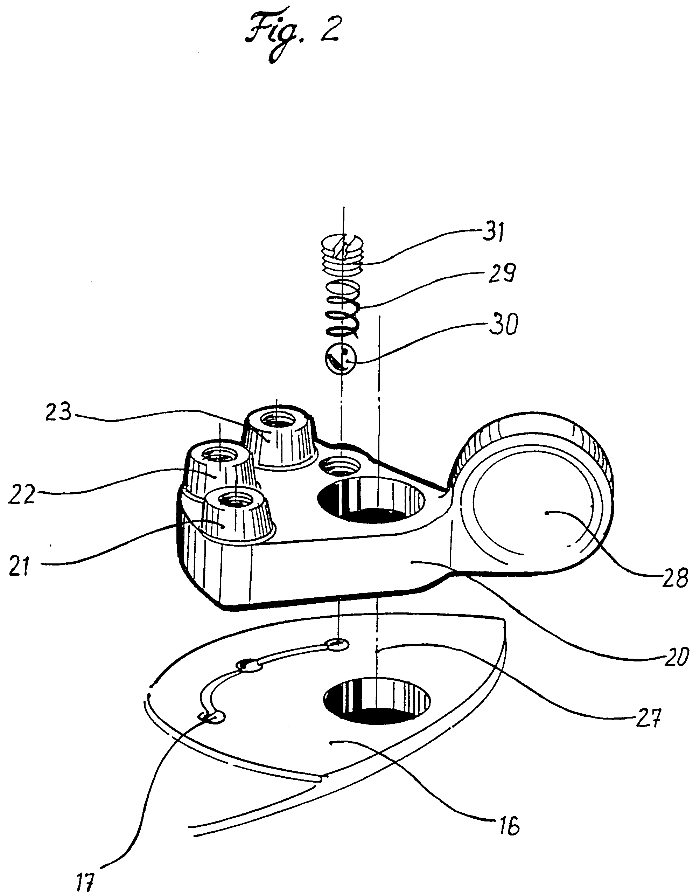

An arc-shaped stop cavity 17 with additional stop recesses which extends about the axis of rotation 27 is located on the upper side of the bearing area 16 and a ball 30 is able to engage in these stop recesses in a locking manner with the ball being held in the rotary plate 20 and being under the pressure of a coil spring 29 which is supported at its upper end at a setscrew 31 which is screwed into the rotary plate 20. In this way, as shown in Fig. 2, three stop positions are fixed, in which the stop ball 30 is in engagement with a stop recess and into which the stop ball 30 can be brought by turning the rotary plate 20 with the stop ball 30 being run along the stop cavity 17.

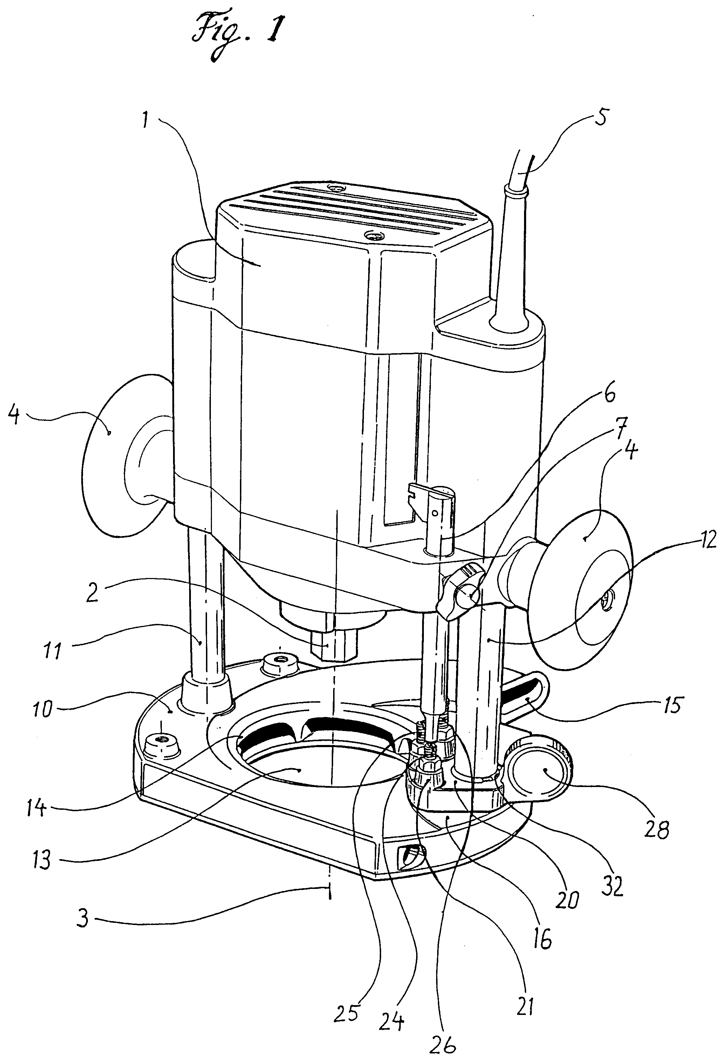

Three take-up protrusions 21, 22 and 23 are formed on the upper side of the rotary plate 20 and these take-up protrusions are provided with threaded bores which are open in the upward direction, which run parallel to the axis of rotation 27 and which are located on a circular arc about the axis of rotation 27. Depth stops 24, 25 and 26 consisting of threaded bolts are screwed in the normal manner into the threaded bores of the take-up protrusions 21, 22 and 23 so that their screw-in position is fixed by lock nuts which can be seen in Fig. 1. The depth stops 24, 25 and 26 have different lengths and/or are screwed into the threaded bores of the take-up protrusions 22, 23 and 24 to varying degrees so that their free ends are located at different heights and thus define different cutting depths in a known manner.

As can be seen from Fig.l the depth stop 24 determines the largest cutting depth, i.e. the cutter head 1 can be lowered to the greatest extent before the stop rod 6 prevents the further lowering movement by bearing on the upper end of the depth stop 24 which is located in its operating position and is thus disposed coaxially with the stop rod 6.

If a smaller cutting depth which is predetermined by a depth stop is set, with the cutter head 1 located in the upper position a handling of the rotary plate 20 is effected at the handle portion 28 and a turning of the turret comprising the rotary plate 20 and the depth stops 24, 25, 26 is effected against the action of the stop ball 30 about the axis of rotation 27 until the desired depth stop 25 or 26 is located in the operating position, i.e. below the stop rod 6 and in coaxial alignment with it which is fixed by the operator by engagement of the stop ball 30 in the associated stop recess of the stop cavity 17.

As shown the depth stops 24, 25 and 26 are located in each operating position of the rotary plate 20 substantially in the area between guide column 12 and tool carrier 2 and are distributed over an angle area of less than 180 degrees so that the handle portion 28 is located in every operating position of one of the depth stops 24, 25 and 26 at the outer side of the guide column 12. The stop rod 6 is disposed immediately adjacent to the guide column 12 and can, where applicable, be disposed farther in than shown so that it is then located substantially between guide column 12 and tool carrier 2.

## Claims

**1** A router
- with a cutter head (1) containing the drive motor and held in a displaceable manner at guide columns (11, 12) which are secured at a base plate (10) and which extend away from it vertically to its workpiece engagement surface
- with a tool holder (2) for a cutter or the like provided at the side of the cutter head (1) facing towards the base plate (10) and coupled to the drive motor, in the axial extension of which the base plate (10) is provided with an opening (13) or recess for the passage of the cutter or the like as well as
- with a cutting depth adjustment device which is provided with a rotary plate (20) mounted on the base plate (10) with at least two depth stops (24, 25, 26) of different height which selectively can be brought into an operating position and with a stop element (6) which is held at the cutter head (1) and which prevents a further lowering movement of the cutter head (1) by resting on the depth stop (24, 25, 26) located in the operating position,
characterised in that the rotary plate (20) is disposed so that it surrounds a guide column (12).

**2** A router according to claim 1, characterised in that the axis of rotation (27) of the rotary plate (20) and the longitudinal centre axis of the guide column (12) surrounded by the rotary plate (20) run coaxially.

**3** A router according to claim 1 or 2, characterised in that the operating position of the depth stops (24, 25, 26) is located at the side of the guide column (12) surrounded by the rotary plate (20) which is facing towards the tool holder (2).

**4** A router according to one of claims 1 to 3, characterised in that the depth stops (24, 25, 26) are disposed in an angle area of the rotary plate (20) of a maximum of 180 degrees and in that the rotary plate (20) is provided with a handle portion (28) extending outwards from the side of the guide column (12) surrounded by it which is facing away from the tool holder (2).
